# EUROPÄISCHE PATENTSCHRIFT

(11) **EP 3 105 464 B1**
(45) Veröffentlichungstag und Bekanntmachung des Hinweises auf die Patenterteilung: **09.03.2022**
(21) Anmeldenummer: 15707264.6
(22) Anmeldetag: 26.01.2015
(51) Int. Cl.: F16D 13/38, F16D 13/44

(54) **NORMAL-EINGERÜCKTE KUPPLUNGSVORRICHTUNG**
NORMALLY-ENGAGED CLUTCH DEVICE
DISPOSITIF D'EMBRAYAGE NORMALEMENT EMBRAYÉ

(30) Priorität: 11.02.2014 DE 102014202438
(43) Veröffentlichungstag der Anmeldung: 21.12.2016
(73) Patentinhaber: Schaeffler Technologies AG & Co. KG, 91074 Herzogenaurach (DE)
(72) Erfinder: CHAMBRION, Martin, 67150 Erstein (FR); RUF, Johannes, 77815 Bühl (DE); RABER, Christoph, 66564 Ottweiler-Steinbach (DE)
(86) Internationale Anmeldenummer: PCT/DE2015/200027
(87) Internationale Veröffentlichungsnummer: WO 2015/120845

(56) Entgegenhaltungen:
- CN-A- 102 084 148
- DE-A1-102008 004 150
- US-A1- 2003 079 953

## Beschreibung

Die vorliegende Erfindung betrifft eine normal-eingerückte Einzelkupplung für einen Antriebsstrang eines Kraftfahrzeugs.

Aus der DE 44 20 251 A1 ist eine normal-eingerückte Kupplungsvorrichtung für einen Antriebsstrang eines Kraftfahrzeugs mit einer Gegendruckplatte und einer durch eine Tellerfeder in axialer Richtung der Kupplungsvorrichtung begrenzt verlagerbaren Anpressplatte zur reibschlüssigen Klemmung einer Kupplungsscheibe zwischen der Gegendruckplatte und der Anpressplatte bekannt. Ein Deckelbauteil weist mehrere Laschenabschnitte auf, durch die die Tellerfeder unter Zwischenlage zweier Drahtringe am Deckelbauteil verkippbar befestigt ist.

Ferner ist aus der US 2003/0079953 A1 eine normal-eingerückte Doppelkupplung für einen Antriebsstrang eines Kraftfahrzeugs bekannt mit zumindest einem getriebeseitigen Deckelbauteil, mit zumindest einer mit einer Abtriebsseite eines Verbrennungsmotors verbindbaren Gegendruckplatte und mit zumindest einer bezüglich der Gegendruckplatte in axialer Richtung der Doppelkupplung begrenzt verlagerbaren Anpressplatte zur reibschlüssigen Klemmung einer Kupplungsscheibe zwischen der Gegendruckplatte und der Anpressplatte, wobei zur reibschlüssigen Klemmung ein getriebeseitiger Reibbelag der Kupplungsscheibe mit einer Reibfläche der in axialer Richtung nicht verlagerbaren Gegendruckplatte in Anlage bringbar ist, und ein motorseitiger Reibbelag der Kupplungsscheibe mit einer Reibfläche Anpressplatte in Anlage bringbar ist.

Es ist Aufgabe der vorliegenden Erfindung, eine hinreichend steife Kupplungsvorrichtung anzugeben, die kostengünstig hergestellt werden kann.

Erfindungsgemäß gelöst wird diese Aufgabe durch eine normal-eingerückte Einzelkupplung gemäß Patentanspruch 1 für einen Antriebsstrang eines Kraftfahrzeugs mit zumindest einem getriebeseitigen Deckelbauteil, mit zumindest einer mit einer Abtriebseite eines Verbrennungsmotors verbindbaren Gegendruckplatte und mit zumindest einer bezüglich der Gegendruckplatte in axialer Richtung der Einzelkupplung begrenzt verlagerbaren Anpressplatte zur reibschlüssigen Klemmung einer Kupplungsscheibe zwischen der Gegendruckplatte und der Anpressplatte, wobei zur reibschlüssigen Klemmung ein getriebeseitiger Reibbelag der Kupplungsscheibe mit einer Reibfläche der in axialer Richtung nicht verlagerbaren Gegendruckplatte in Anlage bringbar ist, und ein motorseitiger Reibbelag der Kupplungsscheibe mit einer Reibfläche der Anpressplatte in Anlage bringbar ist.

Die Einzelkupplung ist insbesondere als gedrückte Kupplungsvorrichtung ausgebildet. Um die kostengünstige Herstellung weiter zu begünstigen, kann bzw. können die Gegendruckplatte und/oder die Anpressplatte und/oder das Deckelbauteil als Blechbauteil bzw. Blechbauteile ausgebildet sein.

Bevorzugte Ausführungsbeispiele der vorliegenden Erfindung sind in den abhängigen Ansprüchen dargelegt.

Vorzugsweise ist die Reibfläche der Gegendruckplatte in axialer Richtung zwischen der Reibfläche der Anpressplatte und dem Deckelbauteil angeordnet. Dies bedeutet, dass im Antriebsstrang des Kraftfahrzeugs die Reibfläche der in axialer Richtung begrenzt verlagerbaren Anpressplatte näher am Verbrennungsmotor angeordnet ist als die Reibfläche der in axialer Richtung nicht verlagerbaren Gegendruckplatte. Hierdurch wird ein besonders kompakter Aufbau der normal-eingerückten Kupplungsvorrichtung ermöglicht, wobei die verwendeten Bauteile besonders kostengünstig aus Blechplatinen ausgestanzt und umgeformt werden können.

Gemäß einem weiteren bevorzugten Ausführungsbeispiel ist das Deckelbauteil in axialer Richtung begrenzt verlagerbar. Vorzugsweise weist das Deckelbauteil eine im Wesentlichen ringförmige Gestalt auf, deren Innen- und Außendurchmesser im Wesentlichen dem Innen- und Außendurchmesser der vorzugsweise ebenfalls im Wesentlichen ringförmigen Gegendruckplatte und/oder dem Innen- und Außendurchmesser der vorzugsweise ebenfalls ringförmigen Anpressplatte entsprechen. Ferner ist es dabei von Vorteil, wenn das Deckelbauteil mit der Anpressplatte fest verbunden ist, so dass das Deckelbauteil einen Zuganker für die Anpressplatte bildet. Diese Verbindung kann kraftschlüssig und/oder formschlüssig erfolgen, kann alternativ oder zusätzlich, aber auch stoffschlüssig, beispielsweise durch Verschweißen, erfolgen. Dabei kann die feste Verbindung unmittelbar, beispielsweise durch die Ausbildung von Hinterschneidungen und Vorsprüngen in den beteiligten Bauteilen, oder mittelbar, beispielsweise durch den Einsatz von Verbindungsmitteln wie Schrauben oder Niete, erfolgen.

Vorzugsweise weist die Anpressplatte mehrere in Umfangsrichtung der Kupplungsvorrichtung voneinander beabstandete Laschenabschnitte auf, die auf einer Kreisbahn angeordnet sind und sich in axialer Richtung erstrecken. Wenn ein drehsymmetrischer Aufbau der Kupplungsvorrichtung gewünscht ist und die Montage der Kupplungsvorrichtung ohne eine bevorzugte Ausrichtung der Anpressplatte bezüglich der Gegendruckplatte erfolgen soll, können die anpressplattenseitigen Laschenabschnitte in Umfangsrichtung voneinander gleichmäßig beabstandet sein. Hierbei ist es ferner von Vorteil, wenn die Laschenabschnitte dieselbe Breite in Umfangsrichtung aufweisen. Auch ist es von Vorteil, wenn die Laschenabschnitte dieselbe Länge in axialer Richtung aufweisen, insbesondere wenn sämtliche Laschenabschnitte der Anpressplatte fest mit dem Deckelbauteil verbunden werden sollen. Die Laschenabschnitte können auf besonders einfache Art und Weise umformtechnisch aus der ausgestanzten Blechplatine der Anpressplatte hergestellt werden.

Weiterhin ist es von Vorteil, wenn in eine Stirnseite des jeweiligen sich in axialer Richtung erstreckenden anpressplattenseitigen Laschenabschnitts ein Loch eingebracht ist. Das Loch ist vorzugsweise als Sackloch ausgebildet. Insbesondere ist es von Vorteil, wenn das Loch eingedornt ist, d.h. ebenfalls im Rahmen der Umformung der Blechplatine auf einem Presswerkzeug eingedornt werden kann. In das Loch ist in vorteilhafter Weise eine Schraube eingedreht, durch die das Deckelbauteil mit der Anpressplatte verbunden ist. In vorteilhafter Weise handelt es sich bei der Schraube um eine selbstfurchende Schraube, so dass kein Gewinde in einem separaten Zerspanungsprozess in das Loch geschnitten werden muss. Auch hierdurch werden die Herstellkosten der normal-eingerückten Kupplungsvorrichtung weiter verringert.

Gemäß einem weiteren bevorzugten Ausführungsbeispiel weist die in axialer Richtung ortsfeste Gegendruckplatte mehrere in Umfangsrichtung voneinander beabstandete Laschenabschnitte auf, die mit der Abtriebsseite des Verbrennungsmotors verbindbar sind. Kanten der gegendruckplattenseitigen Laschenabschnitte sind in Umfangsrichtung mit Kanten der anpressplattenseitigen Laschenabschnitte zur Übertragung eines Drehmoments von der Gegendruckplatte auf die Anpressplatte in Anlage bringbar. Insbesondere befinden sich die Kanten der anpressplattenseitigen Laschenabschnitte mit den Kanten der anpressplattenseitigen Laschenabschnitte in dauerhafter Anlage, wobei diese Anlage jedoch zum einen die Montierbarkeit der Anpressplatte und der Gegendruckplatte gewährleisten muss und zum anderen sicherstellen muss, dass im Betrieb der normal-eingerückten Kupplungsvorrichtung die Anpressplatte in axialer Richtung relativ zur Gegendruckplatte verlagert werden kann, d.h. dass sich die jeweiligen Kanten in gleitbeweglicher Anlage befinden.

Wie bei den Laschenabschnitten der Anpressplatte auch, ist es von Vorteil, wenn die Laschenabschnitte der Gegendruckplatte in Umfangsrichtung gleichmäßig voneinander beabstandet sind. Gleiches gilt für die Ausbildung der Laschenabschnitte aus der ausgestanzten Blechplatine der Gegendruckplatte durch Umformung auf einem Presswerkzeug. Von der Reibfläche der Gegendruckplatte ausgehend, erstrecken sich die Laschenabschnitte vorzugsweise in axialer Richtung zur Motorseite und anschließend in radialer Richtung der Kupplungsvorrichtung nach außen, so dass die in Umfangsrichtung verteilt angeordneten Laschenabschnitte eine Art segmentierten Flansch bilden. Über diesen segmentierten Flansch, der vorzugsweise mit entsprechenden Verbindungslöchern zur Montage von Schraub- oder Nietverbindungen versehen ist, ist die Gegendruckplatte drehfest mit der Abtriebseite des Verbrennungsmotors, vorzugsweise mit einem Schwungrad, wie z.B. einem Einmassenschwungrad oder der Sekundärseite eines Zweimassenschwungrads, verbindbar.

Eine Tellerfeder ist in axialer Richtung zwischen dem Deckelbauteil und der Gegendruckplatte verspannt. Die Verspannung ermöglicht die in axialer Richtung begrenzte Verlagerung des Deckelbauteils bezüglich der in axialer Richtung ortsfesten Gegendruckplatte. Das Deckelbauteil, das fest mit der gleichermaßen in axialer Richtung begrenzt verlagerbaren Anpressplatte verbunden ist, zieht als Zuganker unter Vorspannung der Tellerfeder die Anpressplatte in Richtung der Gegendruckplatte, um die Kupplungsscheibe reibschlüssig zwischen der Reibfläche der Anpressplatte und der Reibfläche der Gegendruckplatte zu klemmen. Somit ist die Kupplungsvorrichtung als normal-eingerückte Kupplungsvorrichtung ausgebildet. Im Querschnitt betrachtet weist die Baugruppe aus Deckelbauteil und Anpressplatte eine im Wesentlichen U-förmige Gestalt auf.

Gemäß einem weiteren bevorzugten Ausführungsbeispiel liegt die Tellerfeder in ihrem radialen Außenbereich, vorzugsweise mittels ihres Kraftrands, mittelbar oder unmittelbar an einer der Kupplungsscheibe abgewandten Oberfläche der Gegendruckplatte an. Ferner liegt die Tellerfeder in ihrem radialen Innenbereich, vorzugsweise mittels ihrer Tellerfederzungen, mittelbar oder unmittelbar an einer der Kupplungsscheibe zugewandten Oberfläche des Deckelbauteils an. Die mittelbare Anlage kann beispielsweise durch Zwischenlage von Drahtringen in den Anlagebereichen erfolgen, um ein Verkippen der Tellerfedern zu ermöglichen. Die unmittelbare Anlage kann beispielsweise durch entsprechend ausgebildete Nocken oder Sicken erfolgen. Insbesondere wenn das Deckelbauteil und die Gegendruckplatte aus Blechplatinen hergestellt werden, ist die Verwendung von Sicken in den Anlagebereichen von Vorteil, da diese umformtechnisch auf einem Presswerkzeug hergestellt werden können, wodurch die Herstellkosten weiter verringert werden können.

Vorzugsweise ist die Tellerfeder mittels einer Schwenklagerung verkippbar am, vorzugsweise in axialer Richtung begrenzt verlagerbaren, Deckelbauteil abgestützt. Die Schwenklagerung weist gemäß einem besonders bevorzugten Ausführungsbeispiel vorzugsweise Flachniete auf, kann jedoch auch andere Formen von Tellerfederzentrierbolzen aufweisen.

Gemäß einem weiteren bevorzugten Ausführungsbeispiel ist eine Abhubfederung zum Ausgleich von Verschleiß der Kontaktstellen der Einzelteile durch kleine Differenzbewegungen in die Schwenklagerung integriert. Alternativ oder zusätzlich kann die Abhubfederung als separates Bauteil mit dem Deckelbauteil fest verbunden sein. Das separate Bauteil kann beispielsweise als Federring ausgebildet sein, dessen Federzungen sich im Bereich der Tellerfederzungen in radialer Richtung nach innen erstrecken und vorzugsweise im Wesentlichen denselben Innendurchmesser wie die Tellerfederzungen aufweisen. Im unbetätigten Zustand der Kupplungsvorrichtung können die Federzungen des Federrings an den Tellerfederzungen anliegen, können jedoch auch in axialer Richtung von diesen beabstandet sein. Die Abhubfederung hat in diesem Fall die Aufgabe, den axialen Weg der Aktoreinrichtung an den Kupplungsdeckel weiterzugeben, um diese somit in Richtung Verbrennungsmotor zu bewegen. Dadurch wird der Abhub der Anpressplatte sichergestellt.

Vorzugsweise kann auf eine Belagfederung, die üblicherweise bei einer konventionellen Kupplungsscheibe zwischen den Reibbelägen und dem mit der Nabe der Kupplungsscheibe verbundenen Belagträger angeordnet ist, und die neben dem günstigeren Verschleißverhalten auch für ein ruckfreies Anfahren des Kraftfahrzeugs sorgt, verzichtet werden.

Die vorliegende Erfindung wird nachfolgend anhand von bevorzugten Ausführungsbeispielen in Verbindung mit den zugehörigen Figuren näher erläutert. In diesen zeigen:
- Figur 1: ein erstes Ausführungsbeispiel einer normal-eingerückten Kupplungsvorrichtung in einer Schnittansicht,
- Figur 2a: die Kupplungsvorrichtung aus Figur 1 in einer perspektivischen Ansicht,
- Figur 2b: die perspektivische Ansicht der Kupplungsvorrichtung aus Figur 2a mit teilweise freigeschnittenem Deckelbauteil,
- Figur 3a: eine Gegendruckplatte der Kupplungsvorrichtung aus Figur 1 von der Getriebeseite aus betrachtet,
- Figur 3b: die Gegendruckplatte der Kupplungsvorrichtung aus Figur 1 von der Motorseite aus betrachtet,
- Figur 4: eine Anpressplatte der Kupplungsvorrichtung aus Figur 1 von der Getriebeseite aus betrachtet,
- Figur 5: eine Teilansicht eines Deckelbauteils eines zweiten Ausführungsbeispiels einer Kupplungsvorrichtung, und
- Figur 6: ein drittes Ausführungsbeispiel einer Kupplungsvorrichtung mit separatem Federring in einer perspektivischen Ansicht.

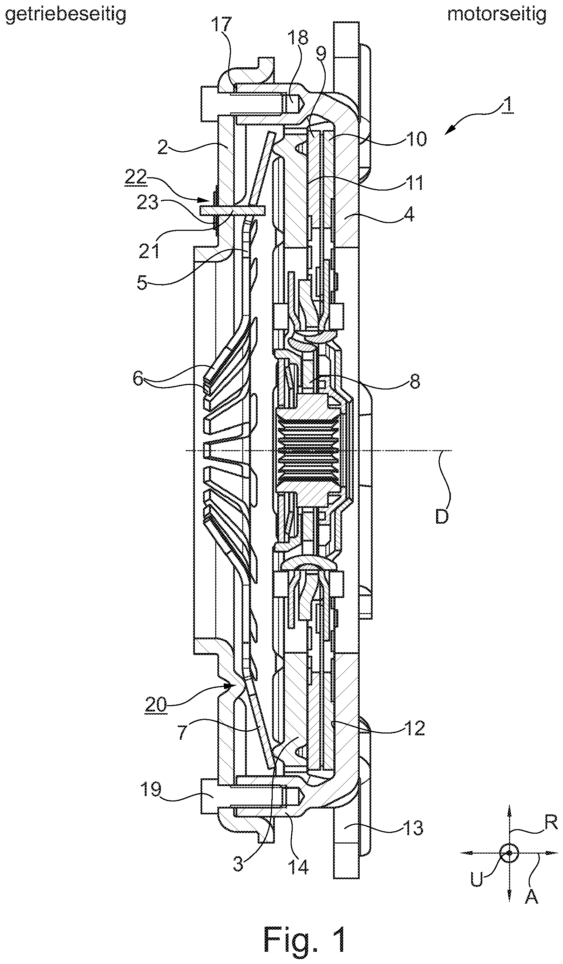

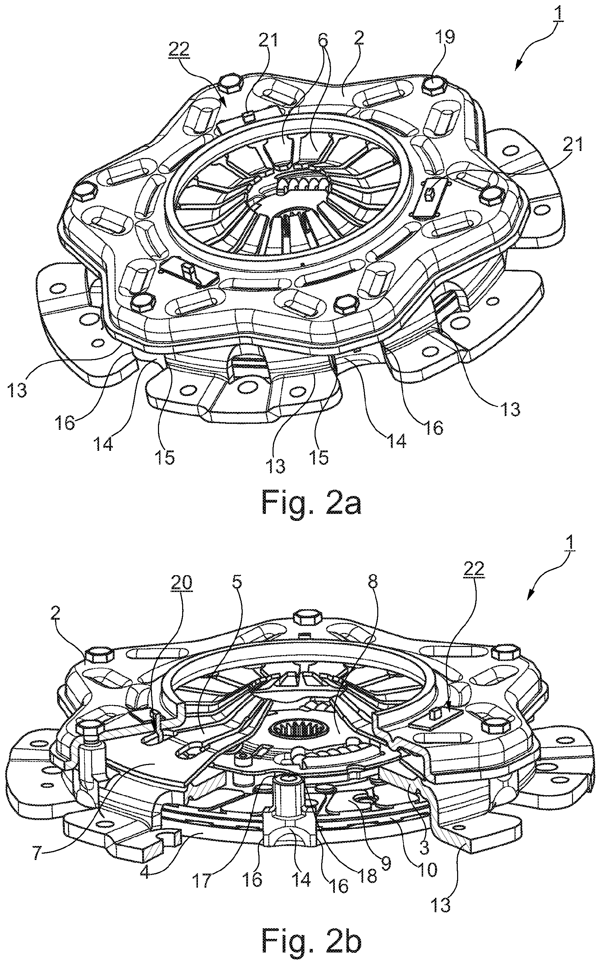

Die Figuren 1 bis 6 betreffen drei bevorzugte Ausführungsbeispiele einer Kupplungsvorrichtung 1. Merkmale, die in der vorliegenden Beschreibung nicht als erfindungswesentlich gekennzeichnet sind, sind als optional zu verstehen. Daher betrifft die nachfolgende Beschreibung auch weitere Ausführungsbeispiele der Kupplungsvorrichtung 1, die Teilkombinationen der im Folgenden zu erläuternden Merkmale aufweist. Insbesondere betrifft die nachfolgende Beschreibung auch eine Gegendruckplatte 3 und eine Anpressplatte 4 für die Kupplungsvorrichtung 1. Die Kupplungsvorrichtung 1 ist insbesondere als normal-eingerückte Kupplungsvorrichtung 1, insbesondere als normal-eingerückte Einzelkupplung, für einen Antriebsstrang eines Kraftfahrzeugs ausgebildet.

Die Kupplungsvorrichtung 1 weist zumindest eine Gegendruckplatte 3, zumindest eine Anpressplatte 4 und zumindest eine in axialer Richtung A der Kupplungsvorrichtung 1 zwischen der Gegendruckplatte 3 und der Anpressplatte 4 angeordnete Kupplungsscheibe 8 auf. Die Gegendruckplatte 3 definiert eine Eingangsseite der Kupplungsvorrichtung 1, während die Kupplungsscheibe 8 eine Ausgangsseite der Kupplungsvorrichtung 1 definiert. Die Anpressplatte 4 ist bezüglich der Gegendruckplatte 3 drehfest gelagert und in axialer Richtung A begrenzt verlagerbar. Durch die Verlagerung der Anpressplatte 4 in axialer Richtung A ist die Kupplungsscheibe 8 zwischen der Gegendruckplatte 3 und der Anpressplatte 4, genauer gesagt zwischen einer Reibfläche 11 der Gegendruckplatte 3 und einer Reibfläche 12 der Anpressplatte 4 mittels ihrer getriebeseitigen Reibbeläge 9 und ihrer motorseitigen Reibbeläge 10 reibschlüssig klemmbar, so dass ein Drehmoment von der Eingangsseite der Kupplungsvorrichtung 1 zur Ausgangsseite der Kupplungsvorrichtung 1 übertragen werden kann. Zusätzlich zu den getriebeseitigen Reibbelägen 9 und den motorseitigen Reibbelägen 10 weist die Kupplungsscheibe 8 eine Nabe auf, die im Drehzentrum der Kupplungsscheibe 8 bzw. im Drehzentrum der Kupplungsvorrichtung 1 angeordnet ist und die Drehachse D der Kupplungsvorrichtung 1 definiert. Ferner weist die Kupplungsscheibe 8 eine Dämpfungseinrichtung auf, die in radialer Richtung R der Kupplungsvorrichtung 1 zwischen den Reibbelägen 9, 10 und der Nabe angeordnet ist und die ausgebildet ist, während des Betriebs der Kupplungsvorrichtung 1 aufdrehende Drehschwingungen zu dämpfen.

Die Kupplungsvorrichtung 1 weist ferner ein getriebeseitiges Deckelbauteil 2 auf, das mit Bezug auf Figur 1 auf der linken Seite angeordnet ist. Das Deckelbauteil 2 ist im Wesentlichen ringförmig ausgebildet und fest mit der Anpressplatte 4 verbunden, so dass die Anpressplatte 4 und das Deckelbauteil 2 gleichermaßen in axialer Richtung A begrenzt verlagerbar sind. Die aus dem Deckelbauteil 2 und der Anpressplatte 4 bestehende Baugruppe weist im Querschnitt betrachtet eine im Wesentlichen U-förmige Gestalt auf, da auch die Anpressplatte 4 ringförmig ausgebildet ist. Im Wesentlichen weisen das Deckelbauteil 2 und die Anpressplatte 4 den gleichen Innendurchmesser auf, wobei auch die Außendurchmesser der beiden Bauteile ähnlich sind.

Außerdem weist die Kupplungsvorrichtung 1 eine Tellerfeder 5 auf. Die Tellerfeder 5 ist in axialer Richtung A zwischen dem Deckelbauteil 2 und der Gegendruckplatte 3 verspannt. Die Tellerfeder 5 ist im Wesentlichen ringförmig ausgebildet und weist in ihrem radialen Außenbereich einen Kraftrand 7 auf. In ihrem radialen Innenbereich weist die Tellerfeder 5 Tellerfederzungen 6 auf, deren freie Enden durch eine nicht dargestellte Aktoreinrichtung zum Ausrücken und/oder Einrücken der Kupplungsvorrichtung 1 betätigbar sind. Vorzugsweise erfolgt die Betätigung zum Ausrücken der Kupplungsvorrichtung 1 drückend, d.h. die Kupplungsvorrichtung 1 ist als normal-eingerückte, gedrückte Kupplungsvorrichtung 1 ausgebildet. Die Aktoreinrichtung umfasst insbesondere auch ein nicht dargestelltes Ausrücklager, das die freien Enden der Tellerfederzungen 6 mit der in axialer Richtung A wirkenden Ausrückkraft beaufschlagt.

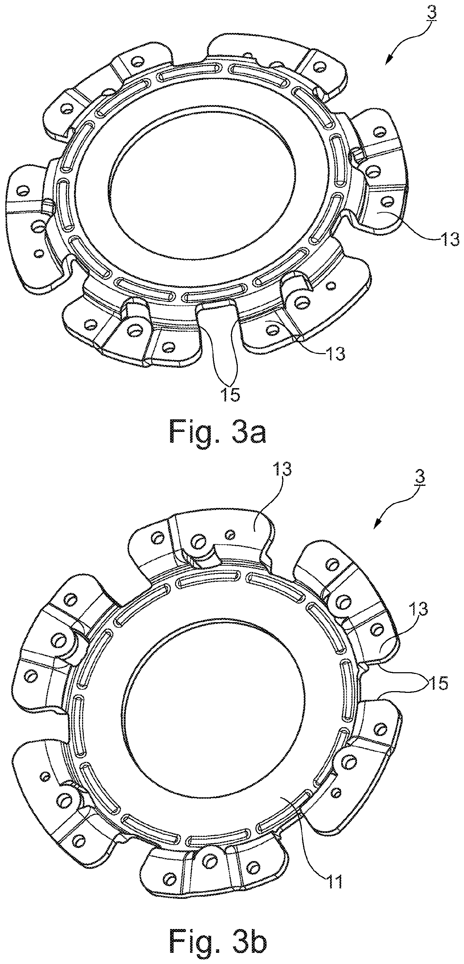

Im dargestellten Ausführungsbeispiel liegt die Tellerfeder 5 in ihrem radialen Außenbereich mittels ihres Kraftrands 7 unmittelbar an einer der Kupplungsscheibe 8 abgewandten Oberfläche der Gegendruckplatte 3 an, wobei diese Oberfläche zur Getriebeseite bzw. zur Seite der Aktoreinrichtung weist, d.h. mit Bezug auf Figur 1 nach links. Die Oberfläche der Gegendruckplatte 3 ist mit mehreren keisbogensegmentförmigen Sicken versehen, wie dies insbesondere aus den Figuren 3a und 3b ersichtlich ist, um eine Verkippung der Tellerfeder 5 bei der Betätigung der Kupplungsvorrichtung 1 zu ermöglichen. Ferner liegt die Tellerfeder 5 in ihrem radialen Innenbereich mittels ihrer Tellerfederzungen 6 unmittelbar an einer der Kupplungsscheibe 8 zugewandten Oberfläche des Deckelbauteils 2 an. Diese Oberfläche des Deckelbauteils 2 weist zur Seite des Verbrennungsmotors, d.h. mit Bezug auf Figur 1, nach rechts. Auch diese Oberfläche ist im dargestellten Ausführungsbeispiel mit entsprechenden kreisbogensegmentförmigen Sicken ausgestattet.

Anstelle der kreisbogensegmentförmigen Sicken auf Seiten der Gegendruckplatte 3 und des Deckelbauteils 2, die auf diese Art und Weise besonders einfach und kostengünstig durch Umformung aus Blechplatinen hergestellt werden können, können zur verkippbaren Anlage der Tellerfeder 5 auch Nocken oder separate Bauteile, beispielsweise Drahtringe oder Drahtringsegmente, vorgesehen sein.

Die Sicken sind Bestandteil einer Schwenklagerung 20, die ein Verkippen der Tellerfeder 5 zur Betätigung der Kupplungsvorrichtung 1 ermöglicht. Die Schwenklagerung 20 weist im dargestellten Ausführungsbeispiel ferner Flachniete 21 auf, mittels derer die Tellerfeder 5 verkippbar am in axialer Richtung A begrenzt verlagerbaren Deckelbauteil 2 abgestützt ist. Anstelle der Flachniete 21, die zudem eine Zentrierung der Tellerfeder 5 ermöglichen, können auch andere Formen von Tellerfederzentrierbolzen vorgesehen sein. Ebenfalls ist es möglich, die Tellerfeder 5 mittels deckelbauteilseitiger Haken, die insbesondere einteilig mit dem Deckelbauteil 2 ausgebildet sind und vorzugsweise umformtechnisch hergestellt werden, verkippbar am Deckelbauteil 2 abzustützen.

Im Ausführungsbeispiel der Kupplungsvorrichtung 1, das in den Figuren 1 bis 4 dargestellt ist, ist in die Schwenklagerung 20 ferner eine Abhubfederung 22 integriert. Die Abhubfederung 22 weist in diesem Ausführungsbeispiel mehrere separate, in Umfangsrichtung U der Kupplungsvorrichtung 1 verteilt angeordnete Blattfedern 23 auf, die getriebeseitig am Deckelbauteil 2 angebracht sind, und die die Flachniete 21 abstützen. Andere Formen der Abhubfederung 22 werden in den nachfolgenden Ausführungsbeispielen erläutert.

Um die Kupplungsscheibe 8 reibschlüssig zwischen der in axialer Richtung A begrenzt verlagerbaren Anpressplatte 4 und der in axialer Richtung A ortsfesten Gegendruckplatte 3 zu klemmen, sind getriebeseitige, mit Bezug auf Figur 1 linke, Reibbeläge 9 der Kupplungsscheibe 8 mit der gegendruckplattenseitigen Reibfläche 11, die mit Bezug auf Figur 1 nach rechts weist, in Anlage bringbar. Ferner sind motorseitige, mit Bezug auf Figur 1 rechte, Reibbeläge 10 der Kupplungsscheibe 8 mit der anpressplattenseitigen Reibfläche 12, die mit Bezug auf Figur 1 nach links weist, in Anlage bringbar. Die Reibfläche 11 der Gegendruckplatte 3 ist in axialer Richtung A zwischen der Reibfläche 12 der Anpressplatte 4 und dem Deckelbauteil 2 angeordnet.

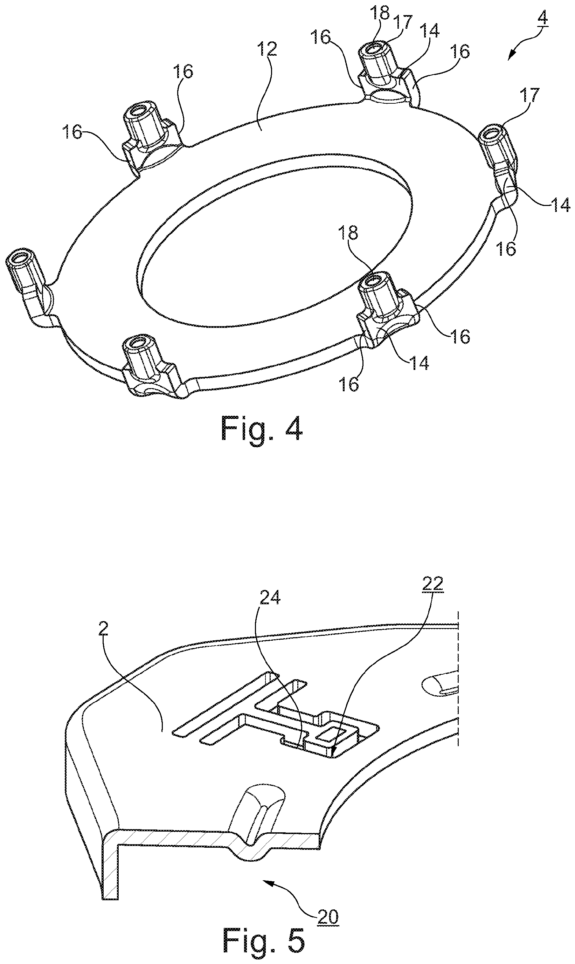

Wie dies insbesondere in Figur 4 dargestellt ist, weist die Anpressplatte 4 mehrere in Umfangsrichtung U der gleichmäßig voneinander beabstandeten Laschenabschnitte 14 auf, die auf einer Kreisbahn angeordnet sind und sich in axialer Richtung A erstrecken.

Jeder der Laschenabschnitte 14 weist eine Stirnseite 17 auf, in die ein Sackloch 18 eingebracht ist, in das eine Schraube 19 eingedreht ist, durch die das Deckelbauteil 2 mit der Anpressplatte 4 verbunden ist. Vorzugsweise wird das Sackloch 18 mittels eines Presswerkzeugs in das Platinenmaterial, aus dem die Anpressplatte 4 hergestellt ist, eingedornt. Zur Verschraubung ist es insbesondere von Vorteil, wenn selbstfurchende Schrauben 19 verwendet werden, so dass kein separater Zerspanungsprozess notwendig ist, um Gewinde in die Sacklöcher 18 der jeweiligen Laschenabschnitte 14 zu schneiden.

Wie das Deckelbauteil 2 und die Anpressplatte 4 ist auch die Gegendruckplatte 3 vorzugsweise im Wesentlichen ringförmig ausgebildet und weist einen ähnlichen Innendurchmesser und einen ähnlichen Außendurchmesser wie das Deckelbauteil 2 und/oder die Anpressplatte 4 auf. Wie dies in den Figuren 3a und 3b dargestellt ist, weist die Gegendruckplatte 3 mehrere in Umfangsrichtung U gleichmäßig voneinander beabstandete Laschenabschnitte 13 auf, die mit der Abtriebseite des Verbrennungsmotors verbindbar sind, d.h. die Eingangsseite der Kupplungsvorrichtung 1 definieren. Jeder der gegendruckplattenseitigen Laschenabschnitte 13 erstreckt sich von der Reibfläche 11 der Gegendruckplatte 3 ausgehend in axialer Richtung A zur Seite des Verbrennungsmotors, d.h. mit Bezug auf Figur 1 nach rechts und von dort ausgehend in radialer Richtung R nach außen. Somit bilden die gegendruckplattenseitigen Laschenabschnitte 13 Flanschsegmente der Gegendruckplatte 3, durch deren eingebrachte Löcher eine Verbindung der Eingangsseite der Kupplungsvorrichtung 1 mit der Abtriebsseite des Verbrennungsmotors, beispielsweise einem Einmassenschwungrad oder der Sekundärmasse eines Zweimassenschwungrads, möglich ist.

Kanten 15 der gegendruckplattenseitigen Laschenabschnitte 13 sind in Umfangsrichtung mit Kanten 16 der anpressplattenseitigen Laschenabschnitte 14 zur Übertragung eines Drehmoments von der Gegendruckplatte 3, d.h. von der Eingangsseite der Kupplungsvorrichtung 1, auf die Anpressplatte 4 in Anlage bringbar. Genauer gesagt befinden sich die Kanten 15, 16 paarweise in gleitbeweglicher Anlage, um in axialer Richtung A das Ein- und Ausrücken der Kupplungsvorrichtung 1 zu ermöglichen.

Im zuvor beschriebenen Ausführungsbeispiel ist es möglich, sowohl das Deckelbauteil 2 als auch die Gegendruckplatte 3 mit ihren Laschenabschnitten 13 sowie die Anpressplatte 4 mit ihren Laschenabschnitten 14 aus Blechplatinen durch Stanzen und Umformung herzustellen. Auch die Lochung sowie das Ausbilden der entsprechenden Sicken kann können während dem Stanzen und der Umformung bzw. nach der Umformung auf den entsprechenden Presswerkzeugen erfolgen.

Das in Figur 5 dargestellte Deckelbauteil 2 des zweiten Ausführungsbeispiels der Kupplungsvorrichtung 1 unterscheidet sich vom Deckelbauteil 2 des ersten Ausführungsbeispiels der Kupplungsvorrichtung 1 dadurch, dass zur Realisierung der Abhubfederung 22 keine separaten Blattfedern 23 notwendig sind. Vielmehr sind die Abhubfedern 24 stanztechnisch in das aus Blech hergestellte Deckelbauteil 2 integriert, so dass die Flachniete 21 der Schwenklagerung 20 unmittelbar mit dem Deckelbauteil 2 verbunden werden können.

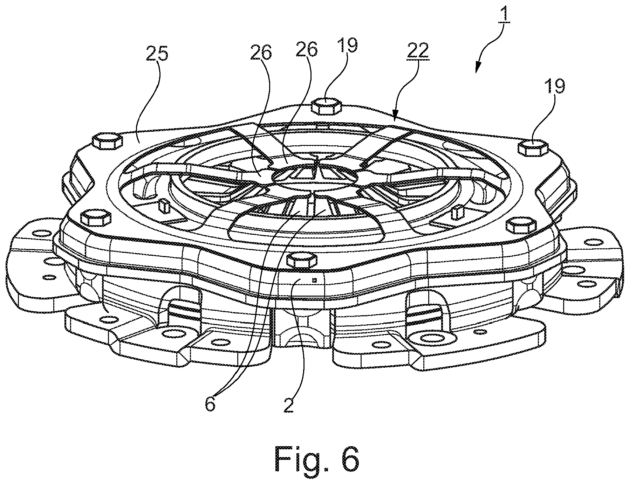

Im dritten Ausführungsbeispiel der Kupplungsvorrichtung 1, das in Figur 6 dargestellt ist, ist die Abhubfederung 22 nicht als Teil der Schwenklagerung 20 ausgebildet, sondern durch ein separates Bauteil realisiert. Genauer gesagt, ist die Abhubfederung 22 als Federring 25 ausgebildet, der mit dem Deckelbauteil 2, vorzugsweise durch dieselben Schrauben, die das Deckelbauteil 2 mit der Anpressplatte 4 verbinden, fest verbunden ist. Federzungen 26 des Federrings 25 erstrecken sich in radialer Richtung R nach innen und sind im Bereich der Tellerfederzungen 6 ausgebildet. Insbesondere entspricht der Innendurchmesser der freien Enden der Federzungen 26 des Federrings 25 weitestgehend dem Innendurchmesser der freien Enden der Tellerfederzungen 6. Im unbetätigten Zustand der Kupplungsvorrichtung 1 können die freien Enden der Federzungen 26 an den freien Enden der Tellerfederzungen 6 anliegen, können jedoch auch von diesen in axialer Richtung A beabstandet sein.

Die vorangegangenen Ausführungsbeispiele betreffen eine normal-eingerückte Kupplungsvorrichtung 1, insbesondere eine normal-eingerückte Einzelkupplung, für einen Antriebsstrang eines Kraftfahrzeugs mit zumindest einem getriebeseitigen Deckelbauteil 2, mit zumindest einer mit einer Abtriebseite eines Verbrennungsmotors verbindbaren Gegendruckplatte 3 und mit zumindest einer bezüglich der Gegendruckplatte 3 in axialer Richtung A der Kupplungsvorrichtung 1 begrenzt verlagerbaren Anpressplatte 4 zur reibschlüssigen Klemmung einer Kupplungsscheibe 8 zwischen der Gegendruckplatte 3 und der Anpressplatte 4, wobei zur reibschlüssigen Klemmung ein getriebeseitiger Reibbelag 9 der Kupplungsscheibe 8 mit einer Reibfläche 11 der in axialer Richtung A nicht verlagerbaren Gegendruckplatte 3 in Anlage bringbar ist, und ein motorseitiger Reibbelag 10 der Kupplungsscheibe 8 mit einer Reibfläche 12 der Anpressplatte 4 in Anlage bringbar ist.

### Bezugszeichenliste

- 1: Kupplungsvorrichtung
- 2: Deckelbauteil
- 3: Gegendruckplatte
- 4: Anpressplatte
- 5: Tellerfeder
- 6: Tellerfederzunge
- 7: Kraftrand
- 8: Kupplungsscheibe
- 9: getriebeseitiger Reibbelag
- 10: motorseitiger Reibbelag
- 11: Reibfläche der Gegendruckplatte
- 12: Reibfläche der Anpressplatte
- 13: Laschenabschnitt der Gegendruckplatte
- 14: Laschenabschnitt der Anpressplatte
- 15: Kante des Laschenabschnitts der Gegendruckplatte
- 16: Kante des Laschenabschnitts der Anpressplatte
- 17: Stirnseite
- 18: Sackloch
- 19: Schraube
- 20: Schwenklagerung
- 21: Flachniet
- 22: Abhubfederung
- 23: separate Blattfeder
- 24: integrierte Abhubfeder
- 25: Federring
- 26: Federzunge
- A: axiale Richtung
- D: Drehachse
- R: radiale Richtung
- U: Umfangsrichtung

## Patentansprüche

1. Normal-eingerückte Einzelkupplung für einen Antriebsstrang eines Kraftfahrzeugs mit zumindest einem getriebeseitigen Deckelbauteil (2), mit zumindest einer mit einer Abtriebsseite eines Verbrennungsmotors verbindbaren Gegendruckplatte (3) und mit zumindest einer bezüglich der Gegendruckplatte (3) in axialer Richtung (A) der Einzelkupplung begrenzt verlagerbaren Anpressplatte (4) zur reibschlüssigen Klemmung einer Kupplungsscheibe (8) zwischen der Gegendruckplatte (3) und der Anpressplatte (4), wobei zur reibschlüssigen Klemmung ein getriebeseitiger Reibbelag (9) der Kupplungsscheibe (8) mit einer Reibfläche (11) der in axialer Richtung (A) nicht verlagerbaren Gegendruckplatte (3) in Anlage bringbar ist, und ein motorseitiger Reibbelag (10) der Kupplungsscheibe (8) mit einer Reibfläche (12) der Anpressplatte (4) in Anlage bringbar ist, wobei eine Tellerfeder (5) in axialer Richtung (A) zwischen dem Deckelbauteil (2) und der Gegendruckplatte (3) verspannt ist.

2. Normal-eingerückte Einzelkupplung nach Anspruch 1, wobei die Reibfläche (11) der Gegendruckplatte (3) in axialer Richtung (A) zwischen der Reibfläche (12) der Anpressplatte (4) und dem Deckelbauteil (2) angeordnet ist.

3. Normal-eingerückte Einzelkupplung nach Anspruch 1 oder 2, wobei das Deckelbauteil (2) in axialer Richtung (A) begrenzt verlagerbar ist, und vorzugsweise mit der Anpressplatte (4) fest verbunden ist.

4. Normal-eingerückte Einzelkupplung nach zumindest einem der Ansprüche 1 bis 3, wobei die Anpressplatte (4) mehrere in Umfangsrichtung (U) der Einzelkupplung, vorzugsweise gleichmäßig, voneinander beabstandete Laschenabschnitte (14) aufweist, die auf einer Kreisbahn angeordnet sind und sich in axialer Richtung (A) erstrecken.

5. Normal-eingerückte Einzelkupplung nach Anspruch 4, wobei in eine Stirnseite (17) des jeweiligen Laschenabschnitts (14) ein Loch, vorzugsweise ein Sackloch (18), eingebracht, vorzugsweise eingedornt, ist, in das eine Schraube (19) eingedreht ist, durch die das Deckelbauteil (2) mit der Anpressplatte (4) verbunden ist.

6. Normal-eingerückte Einzelkupplung nach Anspruch 4 oder 5, wobei die Gegendruckplatte (3) mehrere in Umfangsrichtung (U), vorzugsweise gleichmäßig, voneinander beabstandete Laschenabschnitte (13) aufweist, die mit der Abtriebsseite des Verbrennungsmotors, vorzugsweise mit einem Schwungrad, verbindbar sind, und deren Kanten (15) in Umfangsrichtung (U) mit Kanten (16) der anpressplattenseitigen Laschenabschnitte (14) zur Übertragung eines Drehmoments von der Gegendruckplatte (3) auf die Anpressplatte (4) in Anlage bringbar sind.

7. Normal-eingerückte Einzelkupplung nach zumindest einem der Ansprüche 1 bis 6, wobei die Tellerfeder (5) in ihrem radialen Außenbereich, vorzugsweise mittels ihres Kraftrands (7), mittelbar oder unmittelbar an einer der Kupplungsscheibe (8) abgewandten Oberfläche der Gegendruckplatte (3) anliegt, und die Tellerfeder (5) in ihrem radialen Innenbereich, vorzugsweise mittels ihrer Tellerfederzungen (6), mittelbar oder unmittelbar an einer der Kupplungsscheibe (8) zugewandten Oberfläche des Deckelbauteils (2) anliegt.

8. Normal-eingerückte Einzelkupplung nach zumindest einem der Ansprüche 1 bis 7, wobei die Tellerfeder (5) mittels einer, vorzugsweise Flachniete (21) aufweisenden, Schwenklagerung (20) verkippbar am, vorzugsweise in axialer Richtung (A) begrenzt verlagerbaren, Deckelbauteil (2) abgestützt ist.

9. Normal-eingerückte Einzelkupplung nach Anspruch 8, wobei eine Abhubfederung (22) in die Schwenklagerung (20) integriert ist und/oder als separates Bauteil, vorzugsweise als Federring (25) mit Federzungen (26) im Bereich der Tellerfederzungen (6), mit dem Deckelbauteil (2) fest verbunden ist.

## Claims

1. A normally-engaged single clutch for a drive train of a motor vehicle, having at least one transmission-side cover component (2), having at least one counter-pressure plate (3) which can be connected to an output side of an internal combustion engine, and having at least one pressure plate (4) which can be displaced to a limited extent with respect to the counter-pressure plate (3) in the axial direction (A) of the single clutch for the friction-locking clamping of a clutch disc (8) between the counter-pressure plate (3) and the pressure plate (4), wherein, for friction-locking clamping, a transmission-side friction lining (9) of the clutch disc (8) can be brought into contact with a friction surface (11) of the counter-pressure plate (3) which is not displaceable in the axial direction (A) and a motor-side friction lining (10) of the clutch disc (8) can be brought into contact with a friction surface (12) of the pressure plate (4), wherein a disc spring (5) is braced in the axial direction (A) between the cover component (2) and the counter-pressure plate (3).

2. The normally-engaged single clutch according to claim 1, wherein the friction surface (11) of the counter-pressure plate (3) is arranged in the axial direction (A) between the friction surface (12) of the pressure plate (4) and the cover component (2).

3. The normally-engaged single clutch according to claim 1 or 2, wherein the cover component (2) is displaceable to a limited extent in the axial direction (A), and is preferably fixedly connected to the pressure plate (4).

4. The normally-engaged single clutch according to at least one of claims 1 to 3, wherein the pressure plate (4) has multiple tab sections (14) which are spaced apart from one another, preferably uniformly, in the circumferential direction (U) of the single clutch, which tab sections are arranged on a circular path and extend in the axial direction (A).

5. The normally-engaged single clutch according to claim 4, wherein a hole, preferably a blind hole (18), is provided in one end face (17) of the respective tab section (14), into which hole a screw (19) is screwed by means of which the cover component (2) is connected to the pressure plate (4).

6. The normally-engaged single clutch according to claim 4 or 5, wherein the counter-pressure plate (3) has multiple tab sections (13) which are spaced apart, preferably uniformly, from one another in the circumferential direction (U) and which can be connected to the output side of the internal combustion engine, preferably with a flywheel, and the edges (15) of which can be brought into contact in the circumferential direction (U) with edges (16) of the tab sections (14) on the pressure plate side for transmitting a torque from the counter-pressure plate (3) to the pressure plate (4).

7. The normally-engaged single clutch according to at least one of claims 1 to 6, wherein the disc spring (5) bears in its radially outer region, preferably by means of its force rim (7), indirectly or directly against a surface of the counter-pressure plate (3) facing away from the clutch disc (8), and the disc spring (5) bears in its radially inner region, preferably by means of its disc spring tongues (6), indirectly or directly against a surface of the cover component (2) facing the clutch disc (8).

8. The normally-engaged single clutch according to at least one of claims 1 to 7, wherein the disc spring (5) is tiltably supported on the cover component (2), which is preferably displaceable to a limited extent in the axial direction (A), by means of a pivot bearing (20) preferably having flat rivets (21).

9. The normally-engaged single clutch according to claim 8, wherein a lift-off spring (22) is integrated into the pivot bearing (20) and/or is fixedly connected to the cover component (2) as a separate component, preferably as a spring ring (25) with spring tongues (26) in the region of the disc spring tongues (6).

## Revendications

1. Embrayage simple normalement embrayé pour une chaîne cinématique d'un véhicule à moteur avec au moins un élément de couvercle (2) côté transmission, avec au moins un plateau de contre-pression (3) pouvant être relié à un côté sortie d'un moteur à combustion interne et avec au moins un plateau de pression (4) pouvant être déplacé de manière limitée par rapport au plateau de contre-pression (3) dans la direction axiale (A) de l'embrayage simple pour bloquer par friction un disque d'embrayage (8) entre le plateau de contre-pression (3) et le plateau de pression (4), pour le blocage par friction, une garniture de friction côté transmission (9) du disque d'embrayage (8) pouvant être amenée en contact avec une surface de friction (11) du plateau de contre-pression (3) immobile dans la direction axiale (A) et une garniture de friction côté moteur (10) du disque d'embrayage (8) pouvant être amenée en contact avec une surface de friction (12) du plateau de pression (4), un diaphragme (5) étant tendu dans la direction axiale (A) entre l'élément de couvercle (2) et le plateau de contre-pression (3).

2. Embrayage simple normalement embrayé selon la revendication 1, dans lequel la surface de friction (11) du plateau de contre-pression (3) est disposée dans la direction axiale (A) entre la surface de friction (12) du plateau de pression (4) et l'élément de couvercle (2).

3. Embrayage simple normalement embrayé selon la revendication 1 ou 2, dans lequel l'élément de couvercle (2) peut être déplacé de manière limitée dans la direction axiale (A) et est de préférence relié à demeure au plateau de pression (4).

4. Embrayage simple normalement embrayé selon au moins l'une quelconque des revendications 1 à 3, dans lequel le plateau de pression (4) présente plusieurs sections de patte (14) dans la direction circonférentielle (U) de l'embrayage simple, de préférence régulièrement espacées les unes des autres, qui sont disposées sur une trajectoire circulaire et s'étendent dans la direction axiale (A).

5. Embrayage simple normalement embrayé selon la revendication 4, dans lequel dans une face avant (17) de la section de patte respective (14) est ménagé un trou, de préférence un trou borgne (18), de préférence conique, dans lequel est vissée une vis (19) qui permet de relier l'élément de couvercle (2) au plateau de pression (4).

6. Embrayage simple normalement embrayé selon la revendication 4 ou 5, dans lequel le plateau de contre-pression (3) présente plusieurs sections de patte (13) espacées les unes des autres, de préférence régulièrement, dans la direction circonférentielle (U) qui peuvent être reliées au côté sortie du moteur à combustion interne, de préférence à un volant d'inertie et dont les bords (15) dans la direction circonférentielle (U) peuvent être amenés en contact avec les bords (16) de la section de patte (14) côté plateau de pression pour transmettre un couple du plateau de contre-pression (3) au plateau de pression (4).

7. Embrayage simple normalement embrayé selon au moins l'une quelconque des revendications 1 à 6, dans lequel le diaphragme (5) repose dans sa zone extérieure radiale, de préférence au moyen de son bord de force (7), directement ou indirectement sur une surface du plateau de contre-pression (3) opposée au disque d'embrayage (8) et le diaphragme (5) repose dans sa zone intérieure radiale, de préférence au moyen de ses languettes (6), directement ou indirectement sur une surface de l'élément de couvercle (2) orientée vers le disque d'embrayage (8).

8. Embrayage simple normalement embrayé selon au moins l'une quelconque des revendications 1 à 7, dans lequel le diaphragme (5) peut être basculé au moyen d'un palier de pivotement (20), présentant de préférence des rivets plats (21), sur l'élément de couvercle (2), qui peut être déplacé de manière limitée de préférence dans la direction axiale (A).

9. Embrayage simple normalement embrayé selon la revendication 8, dans lequel une suspension à soulèvement (22) est intégrée dans le palier de pivotement (20) et/ou est reliée à demeure en tant qu'élément séparé, de préférence en tant qu'anneau élastique (25) par des languettes élastiques (26) dans la zone des languettes (6) du diaphragme, à l'élément de couvercle (2).
